# EUROPÄISCHE PATENTSCHRIFT

(11) **EP 2 812 540 B1**
(45) Veröffentlichungstag und Bekanntmachung des Hinweises auf die Patenterteilung: **14.03.2018**
(21) Anmeldenummer: 13718307.5
(22) Anmeldetag: 05.04.2013
(51) Int. Cl.: F01D 15/12, F02C 3/113, F16H 37/04

(54) **ROTOR FÜR EINE DAMPFTURBINE UND ENTSPRECHENDE DAMPFTURBINE**
ROTOR FOR A STEAM TURBINE AND CORRESPONDING STEAM TURBINE
ROTOR POUR UNE TURBINE À VAPEUR ET TURBINE À VAPEUR CORRESPONDANTE

(30) Priorität: 07.05.2012 EP 12166935
(43) Veröffentlichungstag der Anmeldung: 17.12.2014
(73) Patentinhaber: Siemens Aktiengesellschaft, 80333 München (DE)
(72) Erfinder: DEVRIES, Jörg, 46487 Wesel (DE)
(86) Internationale Anmeldenummer: PCT/EP2013/057185
(87) Internationale Veröffentlichungsnummer: WO 2013/167328

(56) Entgegenhaltungen:
- EP-A2- 2 009 270
- DE-A1- 3 825 528
- GB-A- 712 495
- US-A- 4 251 987
- US-A1- 2009 090 096

## Beschreibung

Die Erfindung betrifft einen Rotor für eine Strömungsmaschine.

Des Weiteren betrifft die Erfindung eine Dampfturbine.

Dampfturbinen, die in der kommunalen Energieversorgung eingesetzt werden und als Ausführungsform einer Strömungsmaschine betrachtet werden können, sind vergleichsweise groß dimensioniert und weisen daher ein entsprechend hohes Gewicht auf. Die Gewichte solcher Dampfturbinen können bei weit über 100 Tonnen liegen. Im Wesentlichen umfasst eine Dampfturbine ein drehbar gelagertes Bauteil, das auch als Welle bezeichnet wird. Diese Welle umfasst Laufschaufeln, die fest an der Wellenoberfläche angeordnet sind. Solch eine Welle ist innerhalb eines Gehäuses drehbar gelagert, wobei das Gehäuse Leitschaufeln umfasst, die zusammen mit einer Laufschaufel eine Turbinenstufe darstellen.

Im Betrieb rotiert die Welle einer Dampfturbine vorzugsweise mit 50Hz bzw. mit 60 Hz. Solch hohe Umdrehungsfrequenzen führen zu enormen Fliehkräften an den Laufschaufeln. Insbesondere sind die Endstufen einer Niederdruckdampfturbine entsprechend groß und erfahren dadurch eine besonders hohe Fliehkraft.

Technisch bedingt werden die Wellen der Dampfturbinen mit einer konstanten Drehzahl betrieben. Um dennoch vergleichsweise große Endstufen bauen zu können, werden Materialien eingesetzt, die eine geringere Dichte aufweisen und dadurch geringere Fliehkräfte erfahren. Solch ein Material ist beispielsweise Titan, das in manchen Endstufen eingesetzt wird. Andere Lösungen könnten möglich sein, indem die feste Drehfrequenz verringert wird, wie z.B. eine halbtourige Drehfrequenz. Ebenso wäre es möglich, die Drehfrequenz durch Getriebemaschinen zu verringern. Dokumente GB712495 und EP2009270 offenbaren Rotoren für eine Strömungsmaschine von der Stand der Technik. Es ist Aufgabe der Erfindung, eine Welle für eine Strömungsmaschine anzugeben, die für vergleichsweise hohe Frequenzen geeignet ist.

Gelöst wird diese Aufgabe durch einen Rotor für eine Strömungsmaschine nach Anspruch 1. Somit wird der Weg eingeschlagen, die Frequenz der Welle nicht zu ändern, sondern insbesondere die Endstufe umfassend der Laufschaufeln auf der Welle. Dazu wird ein Planetengetriebe berücksichtigt, das den Vorteil bietet, dass die Frequenz der Welle auf die Frequenz der Planetenscheibe, an dem die Laufschaufeln angeordnet sind, verringert wird. Dadurch sind die Fliehkräfte an den Laufschaufeln der Endstufe wesentlich geringer. Die Folge ist, dass anstatt des beispielhaft aufgeführten Materials Titan ein anderes Material verwendet werden kann, das zwar eine höhere Masse aufweist, aber dafür eine größere Festigkeit wie z.B. Stahl.

Infolge der geringeren Frequenz an der Endstufe kann diese entsprechend der physikalisch begrenzenden Fliehkraft nun mit vergrößerten Querschnitten ausgeführt werden. Durch die Wahl von Werkstoffen geringer Dichte kann der abströmende Querschnitt wie bisher auch in Lösungen ohne Planetengetriebe weiter vergrößert werden.

Vorteilhafte Weiterbildungen sind in den Unteransprüchen angegeben.

Erfindungsgemäß geschieht dies durch eine Öldichtung zwischen der Welle und der Planetenscheibe bzw. der Radscheibe. Ebenso ist in einer alternativen Ausführungsform der Erfindung eine Dampfdichtung zwischen der Welle und der Planetenscheibe möglich. Der im Betrieb strömende Dampf sollte möglichst ohne Verluste und lediglich durch den Strömungskanal strömen. Somit sollten alle möglichen Leckagen zwischen den drehenden und den feststehenden Bauteilen vermieden werden.

In einer vorteilhaften Weiterbildung weist das Planetengetriebe mindesten vier Planeten-Zahnräder auf. Dies führt zu einer erhöhten Stabilität der Welle und führt zu einer geringeren Ausfallmöglichkeit des Planetengetriebes. Erfindungsgemäß ist die Welle für einflutige als auch für zweiflutige Dampfturbinen einsetzbar. Die Erfindung wird anhand des nachfolgenden Ausführungsbeispieles nun näher erläutert. Es zeigen:
- Figur 1: ein Planetengetriebe für eine Welle;
- Figur 2: den Querschnitt einer Dampfturbine mit einer erfindungsgemäßen Endstufe.

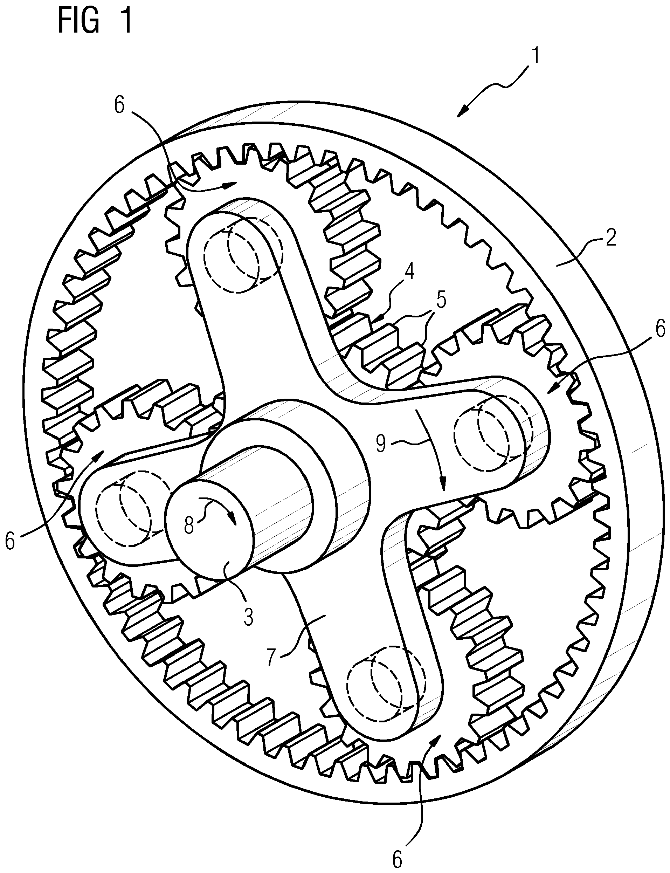

Die Figur 1 zeigt ein Planetengetriebe 1, das aus mehreren einzelnen Bauteilen besteht. Das Planetengetriebe 1 umfasst ein Hohlrad 2, das innenseitig Zähne aufweist. Dieses Hohlrad 2 weist einen größeren Durchmesser als der Durchmesser einer Welle 3 auf. Die Welle 3 weist ein Sonnenrad 4 auf, das am äußeren Umfang Zähne 5 aufweist. In der Figur 1 sind aus Gründen der Übersichtlichkeit lediglich zwei Zähne mit dem Bezugszeichen 5 versehen. Die Zähne 5 des Sonnenzahnrades 4 greifen in entsprechende Zähne eines Planeten-Zahnrades 6 ein. Die Planeten-Zahnräder 6, das Hohlrad 2 und das Sonnenzahnrad 4 sind somit in einer Ebene angeordnet.

Die Planeten-Zahnräder 6 werden über eine Planetenscheibe 7 gehalten und zwar in der Weise, dass die Planeten-Zahnräder 6 drehbar auf der Planetenscheibe 7 angeordnet sind. Das Hohlrad 2 wird drehfest angeordnet. Das Hohlrad kann hierbei starr mit dem Gehäuse 11 verbunden werden.

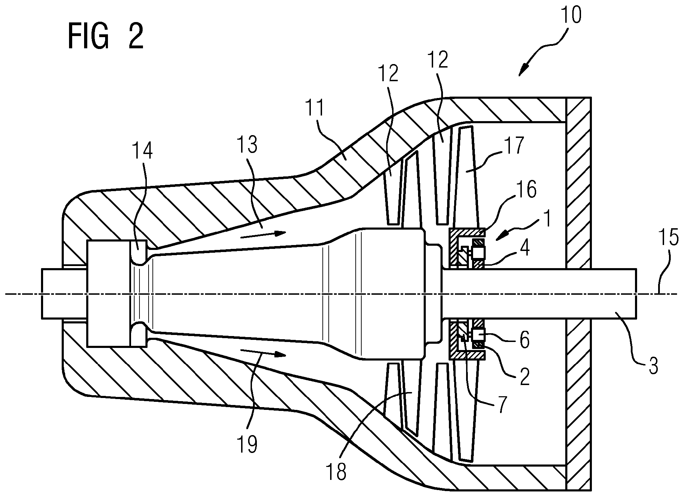

Somit wird eine Drehung 8 der Welle 3 auf das Sonnenzahnrad 4 zum Planeten-Zahnrad 6 übertragen. Dadurch rotiert das Planeten-Zahnrad 6 um eine Rotationsachse. Die Folge ist, dass die Planetenscheibe 7 infolge des Eingreifens des Planeten-Zahnrades 6 in das Zahnrad des Hohlrades 2 in Bewegung gesetzt wird. Die Planetenscheibe 7 rotiert daher ebenfalls und führt eine Drehung 9 durch. Durch die geeignete Wahl der Durchmesser des Hohlrades 2 und der Planeten-Zahnräder 6 ist es möglich, die Frequenz der Planetenscheibe 7 deutlich gegenüber der Frequenz der Welle 3 zu verringern.
In einer ersten Ausführungsform sind die Laufschaufeln 17 an der Planetenscheibe 7 angeordnet.
In einer alternativen Ausführungsform wird an die Planetenscheibe 7 über eine kraftschlüssige Verbindung eine Radscheibe 16 angeordnet. An die Radscheibe 16 sind Laufschaufeln 17 angeordnet (in Figur 1 nicht dargestellt). Auf dem Rotor sind weitere Laufschaufeln 18 angeordnet, die eine Schaufelstufe bilden und sich mit einer geringeren Frequenz drehen als die mit dem Planetengetriebe verbundenen Laufschaufeln. Die fest mit dem Rotor verbundenen weiteren Laufschaufeln 18 sind in einer Strömungsrichtung 19 der Hauptströmung gesehen vor dem mit dem Planetengetriebe verbundenen Laufschaufeln 17 angeordnet. Der Übersichtlichkeit wegen ist lediglich eine Schaufelstufe in Figur 2 dargestellt.

Die Figur 2 zeigt die Anordnung des Planetengetriebes 1 in einer Strömungsmaschine 10. Die als Dampfturbine ausgeführte Strömungsmaschine 10 weist ein Gehäuse 11 auf, an dem innenseitig Leitschaufeln 12 angeordnet sind. In der Figur 2 sind lediglich zwei Leitschaufeln mit dem Bezugszeichen 12 versehen. Die übrigen Leitschaufeln sind aus Gründen der Übersichtlichkeit nicht dargestellt. Zwischen der Welle 3 und dem Gehäuse 11 bildet sich ein Strömungskanal 13 aus, der durch verschiedene Leit- und Laufschaufeln (nicht dargestellt) gebildet ist. Durch diesen Strömungskanal 13 strömt ein Dampf, der über eine Einlassöffnung 14 in die Dampfturbine strömt. Die Welle 3 rotiert um eine Rotationsachse 15. Diese Frequenz ist nahezu konstant. Über das Planetengetriebe 1 rotiert die Planetenscheibe 7 mit einer geringeren Frequenz. An die Planetenscheibe 7 ist eine Radscheibe 16 mit Laufschaufeln 17 einer Endstufe angeordnet. Auf diese Laufschaufeln 17 herrscht nun eine geringere Fliehkraft, als wenn die Laufschaufeln 17 direkt auf der Wellenoberfläche angeordnet wären.

Die in Figur 2 dargestellte Dampfturbine ist eine einflutige Dampfturbine. Das bedeutet, dass der Dampf, der über die Einströmöffnung 14 in den Strömungskanal 13 gelangt, lediglich in eine Richtung strömt. Die Erfindung ist genauso anwendbar für zweiflutige Dampfturbinen. Das bedeutet, dass der Dampf über eine Einströmöffnung in eine Dampfturbine gelangt und von dort in jeweils eine Flut, die um 180° verschiedene Strömungsrichtungen zeigt, weiterströmt. In solchen zweiflutigen Dampfturbinen können zwei Planetengetriebe 1 eingesetzt werden, um die Endstufen jeweils erfindungsgemäß auszubilden. Das bedeutet, dass die Frequenz der Endstufen der zweiflutigen Dampfturbine derart ausgebildet ist, dass gegenüber gleicher Endstufen ohne Planetengetriebe die Fliehkräfte geringer sind infolge der geringeren Frequenz.

## Patentansprüche

1. Rotor für eine Strömungsmaschine (10) mit einem Planetengetriebe (1) umfassend eine Welle (3) und einen um die Welle (3) angeordnetes Hohlrad (2), das drehfest anordenbar ist,
wobei das Hohlrad (2) innenliegende Zähne aufweist, die mit mehreren innenliegenden Planeten-Zahnrädern (6) zusammenwirken,
einer Planetenscheibe (7), die um die Welle (3) angeordnet ist und an der die Planeten-Zahnräder (6) drehbar angeordnet sind,
wobei die Welle (3) ein Sonnenzahnrad (4) aufweist, das mit den Planeten-Zahnrädern (6) zusammenwirkt, wobei die Planetenscheibe (7) mit einer Radscheibe (16) verbunden ist, auf der die Laufschaufeln (17) angeordnet sind,
wobei aus weiteren Laufschaufeln (18) ausgebildete Laufschaufelstufen auf dem Rotor fest angeordnet sind, **dadurch gekennzeichnet, dass**
die Planentenscheibe (7) gegenüber der Welle (3) abgedichtet ist.

2. Rotor nach Anspruch 1,
wobei eine Öldichtung zwischen Welle (3) und Planetenscheibe (7) angeordnet ist.

3. Rotor nach Anspruch 1,
wobei eine Dampfdichtung zwischen Welle (3) und Planetenscheiben (7) angeordnet ist.

4. Rotor nach einem der vorhergehenden Ansprüche,
wobei mindestens vier Planeten-Zahnräder (6) angeordnet sind.

5. Rotor nach einem der vorhergehenden Ansprüche,
wobei die Planeten-Zahnräder (6), das Sonnenzahnrad (4) und das Hohlrad (2) derart dimensioniert sind, dass eine Wellen-Drehfrequenz der Welle höher ist als die Planetenscheiben-Drehfrequenz des Planetenscheibe (7).

6. Rotor nach Anspruch 5, wobei die Laufschaufeln (17) an der Radscheibe (16) angeordnet sind.

7. Dampfturbine mit einem Rotor gemäß einem der Ansprüche 1 bis 6.

8. Dampfturbine nach Anspruch 7,
wobei die Dampfturbine zweiflutig ausgebildet ist und jede Flut ein Planetengetriebe (1) gemäß einem der Ansprüche 1 bis 7 aufweist.

## Claims

1. Rotor for a turbomachine (10) having a planetary gearset (1) comprising a shaft (3) and a crown wheel (2) which is arranged about the shaft (3) and can be arranged in a rotationally fixed manner,
wherein the crown wheel (2) has internal teeth which interact with multiple internal planet gears (6),
a planet disk (7) which is arranged about the shaft (3) and on which the planet gears (6) are rotatably arranged,
wherein the shaft (3) has a sun gear (4) which interacts with the planet gears (6), wherein the planet disk (7) is connected to a rotor disk (16) on which the rotor blades (17) are arranged,
wherein rotor blade stages formed of further rotor blades (18) are arranged fixedly on the rotor,
**characterized in that**
the planet disk (7) is sealed with respect to the shaft (3).

2. Rotor according to Claim 1,
wherein an oil seal is arranged between the shaft (3) and the planet disk (7).

3. Rotor according to Claim 1,
wherein a steam seal is arranged between the shaft (3) and the planet disk (7).

4. Rotor according to one of the preceding claims,
wherein at least four planet gears (6) are arranged.

5. Rotor according to one of the preceding claims,
wherein the planet gears (6), the sun gear (4) and the crown wheel (2) are dimensioned such that a shaft rotational frequency of the shaft is higher than the planet disk rotational frequency of the planet disk (7).

6. Rotor according to Claim 5,
wherein the rotor blades (17) are arranged on the rotor disk (16).

7. Steam turbine having a rotor according to one of Claims 1 to 6.

8. Steam turbine according to Claim 7,
wherein the steam turbine is of double-flow configuration and each flow channel has a planetary gearset (1) according to one of Claims 1 to 7.

## Revendications

1. Rotor pour une turbomachine (10), ayant un train (1) épicycloïdal, comprenant un arbre (3) et une roue (2) à denture intérieure, qui est montée autour de l'arbre (3) et qui peut être montée fixe en rotation,
dans lequel la roue (2) à denture intérieure a des dents, qui se trouvent à l'intérieur et qui coopèrent avec plusieurs roues (6) dentées satellites se trouvant à l'intérieur,
un disque (7) satellite, qui est monté autour de l'arbre (3) et sur lequel les roues (6) dentées satellites sont montées tournantes,
dans lequel l'arbre (3) a une roue (4) dentée solaire, qui coopère avec les roues (6) dentées satellites, le disque (7) satellite étant relié à un disque (16) de roue, sur lequel sont montées les aubes (17) mobiles,
dans lequel des étages d'aubes mobiles constitués d'autres aubes (18) mobiles sont solidaires du rotor,
**caractérisé en ce que**
le disque (7) satellite est rendu étanche par rapport à l'arbre (3).

2. Rotor suivant la revendication 1,
dans lequel un joint à huile est monté entre l'arbre (3) et le disque (7) satellite.

3. Rotor suivant la revendication 1,
dans lequel un joint à vapeur est monté entre l'arbre (3) et le disque (7) satellite.

4. Rotor suivant l'une des revendications précédentes,
dans lequel il est prévu au moins quatre roues (6) dentées satellites.

5. Rotor suivant l'une des revendications précédentes,
dans lequel les roues (6) dentées satellites, la roue (4) dentée solaire et la roue (2) à denture intérieure ont des dimensions telles qu'une fréquence de rotation de l'arbre est plus grande que la fréquence de rotation du disque (7) satellite.

6. Rotor suivant la revendication 5,
dans lequel les aubes (17) mobiles sont montées sur le disque (16) de roue.

7. Turbine à vapeur ayant un rotor suivant l'une des revendications 1 à 6.

8. Turbine à vapeur suivant la revendication 7,
dans laquelle la turbine à vapeur est constituée à double flux et chaque flux a un train (1) épicycloïdal suivant l'une des revendications 1 à 7.
